# EUROPÄISCHE PATENTSCHRIFT

(11) **EP 0 881 144 B1**
(45) Veröffentlichungstag und Bekanntmachung des Hinweises auf die Patenterteilung: **19.03.2003**
(21) Anmeldenummer: 98108371.0
(22) Anmeldetag: 07.05.1998
(51) Int. Cl.: B64D 9/00

(54) **Einbauvorrichtung für eine Rollenantriebseinheit**
Mounting device for roller-driving unit
Dispositif de montage pour un unité d'entraînement de rouleaux

(30) Priorität: 28.05.1997 DE 19722468; 12.06.1997 DE 19724941
(43) Veröffentlichungstag der Anmeldung: 02.12.1998
(73) Patentinhaber: Telair International GmbH, 83734 Hausham (DE); Airbus Deutschland GmbH, 21129 Hamburg (DE)
(72) Erfinder: Huber, Thomas, 82393 Iffeldorf (DE); Holzner, Richard, 84405 Dorfer (DE)
(74) Vertreter: Bohnenberger, Johannes, Dr.

(56) Entgegenhaltungen:
- EP-A- 0 577 884
- EP-A- 0 816 224
- US-A- 4 930 612

## Beschreibung

Die Erfindung betrifft eine Einbauvorrichtung für eine Rollenantriebseinheit -PDU- zum Antreiben und Fördern von Gegenständen, insbesondere Frachtcontainern auf einer Rollenförderbahn, umfassend einen Einbaukanal, auf dessen Boden die PDU fixierbar ist.

Prinzipiell besteht der Wunsch, die genannten Rollenantriebseinheiten auch in Einbaukanälen, die am Boden eines Flugzeugs befestigt werden können, einzubauen. Hierbei besteht aber das Problem, daß bei einem Wassereinbruch sich das Wasser im Einbaukanal stauen kann, und zwar vor allem dann, wenn der Einbaukanal in Längsrichtung zusätzlich durch andere Bauteile, wie Befestigungseinrichtungen (Latches) blockiert ist. Das so aufgestaute Wasser kann dazu führen, daß eine der Rollenantriebseinheiten "absäuft". Dies kann zu mechanischen und/oder elektrischen Funktionsstörungen führen und irreversible Schäden an der Rollenantriebseinheiten verursachen.

Ein ähnliches Problem besteht mit dem sich im Einbaukanal ansammelnden Schmutz, der im trockenen Zustand, gerade aber zusammen mit ausgelaufenen Flüssigkeiten zu Beschädigungen der Rollenantriebseinheiten führen kann.

Das Dokument US-A-4 930 612 zeigt eine Einbauvorrichtung gemäß dem Oberbegriff des Anspruchs 1 bzw 6.

Die Aufgabe der vorliegenden Erfindung besteht darin, eine Einbauvorrichtung zu schaffen, bei der die Gefahr von Funktionsstörungen der Rollenantriebseinheit im Langzeitbetrieb erheblich reduziert ist.

Diese Aufgabe wird mit einer Einbauvorrichtung nach den Merkmalen des Patentanspruchs 1 bzw 6 gelöst.

Anspruch 1 sicht eine Entwässerungseinrichtung im Boden des Einbaukanals, im Bereich des Montageortes der Rollenantriebseinheit vor, die in den Einbaukanal gelangtes Wasser abführt und eine Wanne umfaßt.

Die Entwässerungseinrichtung kann elektrische oder mechanische Mittel, wie Pumpen umfassen.

Die Wanne sollte eine gewisse Tiefe aufweisen, derart, daß eindringendes Wasser zunächst einmal sofort aus dem Einbaukanal abfließt und in der Wanne gesammelt wird. Auch können Schmutzpartikel so in der Wanne aufgefangen werden und bei Bedarf (z. B. einmal pro Jahr) von oben abgesaugt werden.

Gemäß Anspruch 6 umfaßt die Entwässerungseinrichtung in Beden des Einbaukanals eine Filtereinrichtung und/oder ein Sieb zum Zurückhalten gröbere Schmutzteile. Dadurch kann Flüssigkeit nach unten ablaufen und sich im Bilgen-Bereich des Flugzeugs sammeln, von wo es dann über dort regelmäßig vorgesehene Ventile von Zeit zu Zeit abgeführt wird.

Um an die Entwässerungseinrichtung zum Absaugen von Schmutzpartikeln zu gelangen, ist die Rollenantriebseinheit zweckmäßigerweise hoch- oder fortschwenkbar montiert.

Die Montage der Rollenantriebseinheit und der Wanne im Einbaukanal wird dann besonders einfach, wenn Rollenantriebseinheit und Wanne über die gleichen Befestigungseinrichtungen, beispielsweise über die gleichen Schraubbolzen am Boden des Einbaukanals befestigt werden.

Die Erfindung wird nachstehend auch hinsichtlich weiterer Merkmale und Vorteile anhand der Beschreibung eines Ausführungsbeispiels und unter Bezugnahme auf die beiliegenden Zeichnungen näher erläutert.

Hierbei zeigen:
- Fig. 1: eine Explosionsansicht eines Ausführungsbeispiels einer erfindungsgemäßen Einbauvorrichtung mit Rollenantriebseinheit, Transportrolle und Befestigungseinrichtung;
- Fig. 2: die Einbauvorrichtung mit Rollenantriebseinheit, Transportrolle und Befestigungseinrichtung aus Fig. 1 im zusammengebauten Zustand in perspektivischer Ansicht schräg von oben;
- Fig. 3: die Einbauvorrichtung nach Fig. 2 in perspektivischer Ansicht schräg von unten;
- Fig. 4: die Einbauvorrichtung nach Fig. 2 von unten;
- Fig. 5: die Einbauvorrichtung nach Fig. 2 von der Seite;
- Fig. 6: die Einbauvorrichtung nach Fig. 2 von oben;
- Fig. 7: die Einbauvorrichtung nach Fig. 2 von vorne;
- Fig. 8: eine Ausführungsform einer erfindungsgemäßen Wanne von oben;
- Fig. 9: eine Schnittansicht der Wanne entlang der Linie IX-IX in Fig. 8;
- Fig. 10: eine Schnittansicht der Wanne entlang der Linie X-X in Fig. 8.

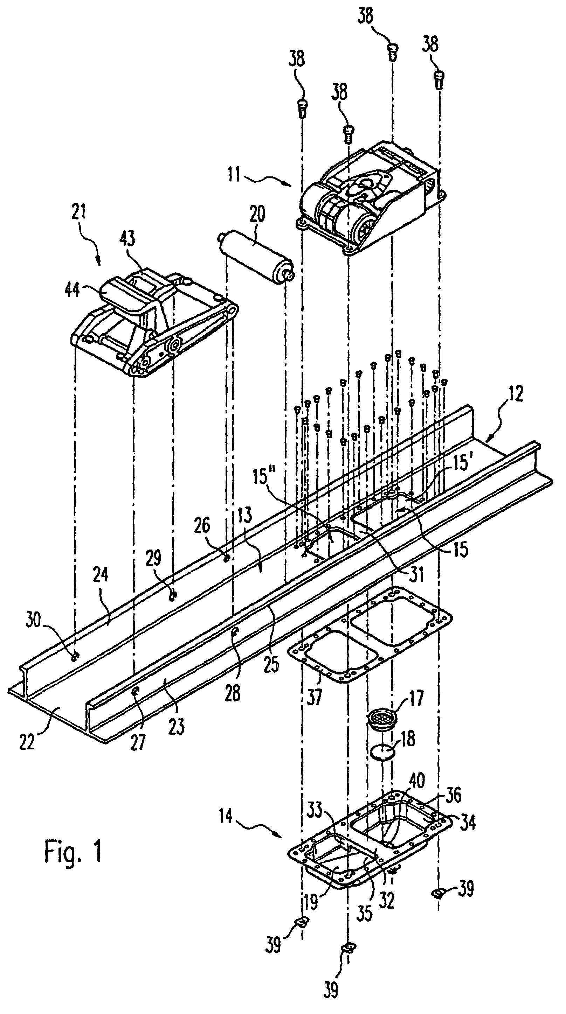

Fig. 1 zeigt eine Ausführungsform der erfindungsgemäßen Einbauvorrichtung mit einer Rollenantriebseinheit (PDU) 11, einer Transportrolle 20 und einer Befestigungseinrichtung (Latch) 21 in Explosionsansicht schräg von oben. Die Einbauvorrichtung umfaßt zunächst einen geradlinig verlaufenden Einbaukanal 12. Der Einbaukanal 12 besteht aus einer Bodenplatte 22 sowie zwei seitlichen Rippen 23, 24. Zwischen den seitlichen Rippen 23, 24 wird auf der Bodenplatte 22 ein Boden 13 des Einbaukanals 12 definiert. Auf dem Boden 13 des nach oben offenen Einbaukanals 12 wird die bereits genannte Rollenantriebseinheit 11 in noch näher zu erläuternder Weise montiert.

Die Transportrolle 20 und die Befestigungseinrichtung (Latch) 21 werden in entsprechenden Bohrungen 25, ..., 30 an den seitlichen Rippen 23, 24 befestigt. Am Boden 13 des Einbaukanals 12 am Montageort der Rollenantriebseinheit 11 ist eine Öffnung 15 vorgesehen. Über die Öffnung 15 erstreckt sich ein Steg 31, so daß die Öffnung 15 in einen vorderen Teil 15' und in einen hinteren Teil 15'' zerfällt. Der Steg 31 bewirkt eine Versteifung des Bodens 13 des Einbaukanals 12 im Bereich der Rollenantriebseinheit 11.

Unterhalb der Öffnung 15 ist eine Wanne 14 befestigbar. Die Wanne 14 weist eine im wesentlichen der Bodenfläche der Rollenantriebseinheit 11 entsprechende Umrißform auf. Sie ist nach oben hin bis auf einen korrespondierend zum Steg 31 des Einbaukanals 12 angeordneten Steg 32 offen. Der offenen Seite gegenüberliegend angeordnet weist die Wanne einen trichterförmig auf einen tiefsten Punkt zulaufenden Wannenboden 19 auf. Seitlich wird die Wanne durch eine umlaufende Wand 34 begrenzt. Zwischen dem wannenseitigen Steg 32 und dem Wannenboden 19 ist eine Zwischenwand 33 angeordnet, die den Innenraum der Wanne 14 in zwei Teilbereiche aufspaltet. Die beiden Teilbereiche des Innenraums der Wanne 14 sind durch eine ausreichend große Öffnung 35 im unteren Bereich der Zwischenwand 33 miteinander verbunden.

Der obere Rand der Wanne ist flächig ausgebildet und bildet zusammen mit dem Steg 32 in etwa die Form einer flächigen beinahe eckigen 8. Über dem flächig ausgebildeten Wannenrand 36 und einer entsprechend geformten Dichtung 37 ist die Wanne 14 von unten her den Bereich der Öffnung 15 überdeckend am Boden 13 des Einbaukanals 12 befestigbar.

Die Befestigung der Wanne 14 am Einbaukanal 12 erfolgt zunächst durch ein Vernieten des Wannenrands 36 mit dem Boden 13 des Einbaukanals unter Zwischenschaltung der Dichtung 37. Auf die so am Einbaukanal 12 befestigte Wanne 14 kann dann die Rollenantriebseinheit 11 mittels Schraubbolzen 38 befestigt werden, die sich durch entsprechende Öffnungen am Boden 13, in der Dichtung 37 und Bohrungen 45, ..., 48 im Wannenrand 36 hindurchführen und sich von unterhalb des Wannenrands 36 mittels entsprechender Muttern 39 sichern lassen.

Am tiefsten Punkt des Wannenbodens 19 ist eine Entwässerungsöffnung 40 angeordnet, die hier aus einem im wesentlichen trichterförmigen Auslaß besteht. In die Entwässerungsöffnung 40 werden ein Filter 18 und ein Sieb 17 übereinander angeordnet eingelegt.

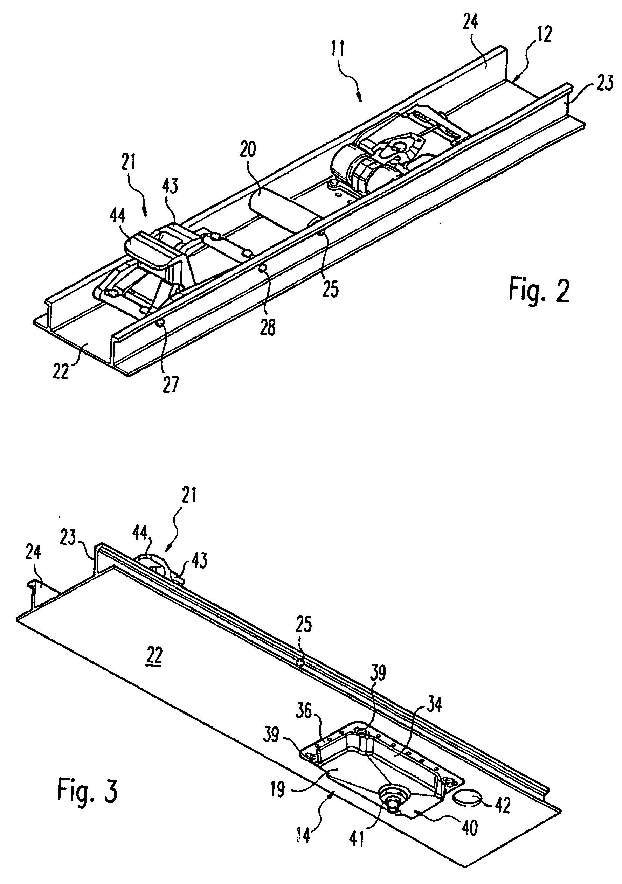

In Fig. 2 ist die Einbauvorrichtung nach Fig. 1 in zusammengesetztem Zustand dargestellt. Die Befestigungseinrichtung (Latch) 21 und die Transportrolle 20 sind an den seitlichen Rippen 23, 24 des Einbaukanals 12 befestigt. Die Rollenantriebseinheit 11 ist mittels der Schraubbolzen 38 und den Muttern 39 (Fig. 1) am Boden 13 und dem Wannenrand 36 befestigt.

In Fig. 3 ist die Einbauvorrichtung aus Fig. 2 in perspektivischer Ansicht schräg von unten dargestellt. Die Entwässerungsöffnung 40 der Wanne 14 wird durch einen trichterförmigen Stutzen 41 gebildet, der am tiefsten Punkt des Wannenbodens 19 angeordnet ist. Wie aus Fig. 3 erkennbar, ist im Bereich neben der Wanne 14 am Boden 13 des Einbaukanals 12 eine Öffnung 42 eingearbeitet. Diese Öffnung 42 kann zum Durchführen von Anschlußkabeln für die Rollenantriebseinheit 11 verwendet werden, ist aber sowohl mit durchgeführten Anschlußkabeln als auch ohne Anschlußkabel fluiddicht mit einer entsprechenden Dichtungskappe (nicht gezeigt) verschließbar.

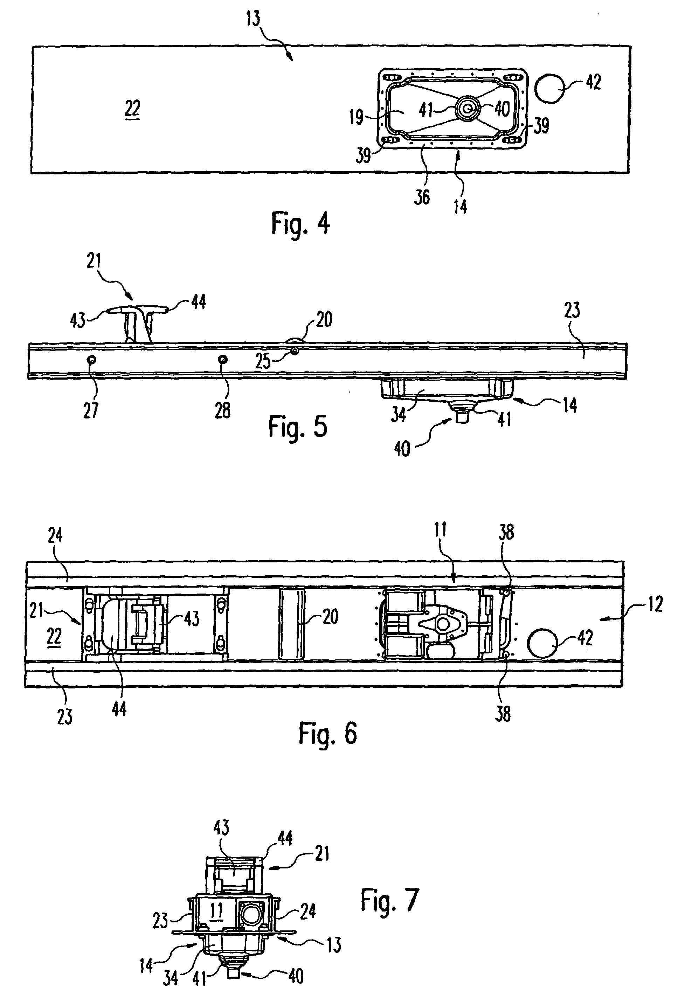

Fig. 4 zeigt die Einbauvorrichtung aus Fig. 2 von unten. Dementsprechend ist die Unterseite des Einbaukanals 12 und die Unterseite der Wanne 14 erkennbar. Die Wanne 14 weist eine im wesentlichen rechteckförmige Querschnittsform auf, wobei die vier Ecken des Wannenkörpers leicht nach innen gedrückt sind, um den Muttern 39 für die durch den Wannenrand 36 geführten Schraubbolzen 38 Platz zu bieten. Bei den Muttern 39 handelt es sich um Annietmuttern (selbstsichernd), die die Wanne 14 mit der (optionalen) Dichtung 37 und den Kanal 12 verbunden. Dies erleichtert die Installation bzw. Deinstallation der Rollenantriebseinheit 11, da der Kanal während dieser Aktionen im Flugzeug eingebaut bleiben kann.

In Fig. 5 ist die Einbauvorrichtung aus Fig. 2 von der Seite her dargestellt. Nach oben ragen aus dem Einbaukanal 12 Riegelelemente 43, 44 der Befestigungseinrichtung 21 sowie ein kleiner Bereich der Transportrolle 20 hervor. An der Unterseite des Bodens 13 schließt plan die Wanne 14 an.

In Fig. 6 ist die Einbauvorrichtung aus Fig. 2 in Draufsicht dargestellt. Zu erkennen sind die Oberseiten der im Einbaukanal 12 angeordneten Elemente, nämlich der Befestigungseinrichtung 21, der Transportrolle 20 und der Rollenantriebseinheit 11.

In Fig. 7 ist die Einbauvorrichtung aus Fig. 2 vom wannenseitigen Ende her dargestellt. Zu erkennen ist dementsprechend die mittels Schraubbolzen 38 und Muttern 39 mit dem Boden des Einbaukanals 12 und dem Wannenrand 36 verschraubte Rollenantriebseinheit 11. Hinter der Rollenantriebseinheit 11 ist die Befestigungseinrichtung (Latch) 21 angeordnet, die hier nur mit ihren Riegelelementen 43, 44 hervorragt.

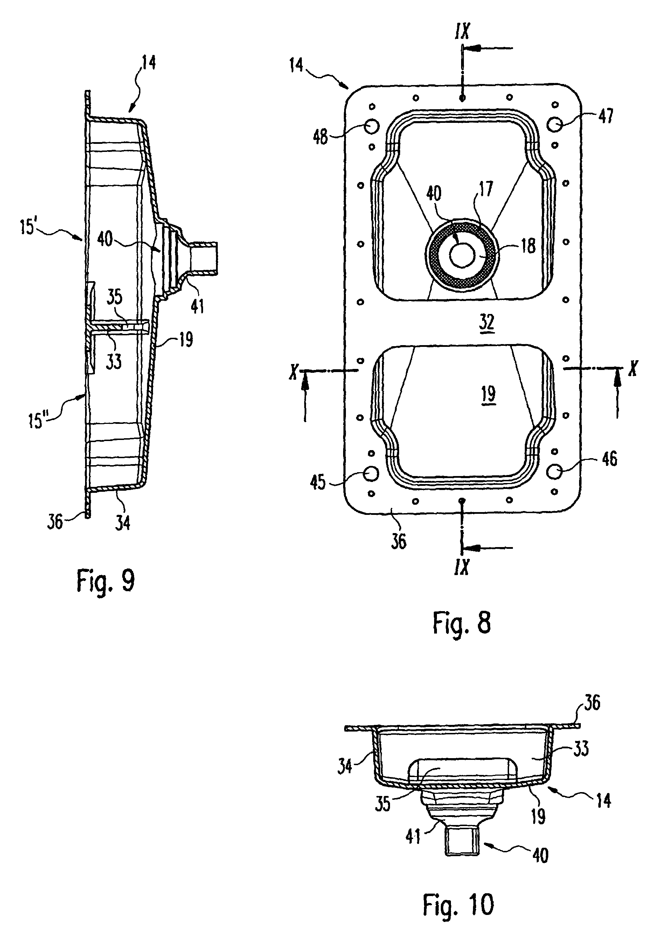

In Fig. 8 ist die Wanne 14 in der Ansicht von oben vergrößert dargestellt. Der flächig ausgebildete Wannenrand 36 weist zahlreiche Bohrungen zum Vernieten von Wanne 14 und Einbaukanal 12 auf. Die vier größeren Bohrungen 45, ..., 48 im Bereich der äußeren Ecken des Wannenrandes 36 sind - wie bereits erwähnt - zum Durchführen der Schraubbolzen 38 vorgesehen. Der trichterförmig zulaufende Wannenboden 19 besteht hier aus vier entsprechend aneinandergesetzten ebenen Teilflächen. Der Wannenboden könnte aber auch aus einer einzigen Plattenfläche gebildet werden, die ebenfalls auf einen tiefsten Punkt zulaufen könnte.

In Fig. 9 ist ein Schnitt entlang der Linie IX-IX in Fig. 8 dargestellt. Besonders gut zu erkennen ist hier der kreissymmetrische, trichterförmige Stutzen 41, der die Entwässerungsöffnung 40 umgibt. Im oberen, weiteren Bereich des trichterförmigen Stutzens 41 ist das Sieb 17 und der Filter 18 übereinanderliegend angeordnet. Im Innern des trichterförmigen Stutzens 41 sind entsprechende Aufnahmen für das kreisrunde Sieb 17 und das kreisrunde Filter 18 ausgebildet.

In Fig. 10 ist ein Schnitt entlang der Linie X-X in Fig. 8 dargestellt. In dieser Schnittansicht ist die unter dem Steg 33, der einen Teil des Wannenrands 36 bildet, angeordnete Zwischenwand 33 gut erkennbar. Ebenfalls erkennbar ist die Öffnung 35 in der Zwischenwand 33, welche eine Verbindung zwischen den beiden Teilen des Innenraums der Wanne 14 bildet. Diese Zwischenwand 23 erfüllt eine Doppelfunktion. Sie dient zum einen dazu, die Wanne 14 zu versteifen. Zum anderen wirkt sie einem "Schwappen" der Flüssigkeit, mit dem im Flugbetrieb zu rechnen ist, entgegen.

### Bezugszeichenliste

- 11: Rollenantriebseinheit (PDU)
- 12: Einbaukanal
- 13: Boden
- 14: Wanne
- 15: Öffnung
- 15', 15": vorderer, hinterer Teil (der Öffnung)
- 17: Siebeinrichtungen, Sieb
- 18: Filtereinrichtungen, Filter
- 19: Wannenboden
- 20: Transportrolle
- 21: Befestigungseinrichtung (Latch)
- 22: Bodenplatte
- 23, 24: seitliche Rippen
- 25,..., 30: Bohrungen
- 31: Steg (Einbaukanal)
- 32: Steg (Wanne)
- 33: Zwischenwand
- 34: Wand (Wanne)
- 35: Öffnung
- 36: Wannenrand
- 37: Dichtung
- 38: Schraubbolzen
- 39: Mutter
- 40: Entwässerungsöffnung
- 41: trichterförmiger Stutzen
- 42: Öffnung
- 43, 44: Riegelelemente
- 45,..., 48: Bohrungen (Wannenrand)

## Patentansprüche

1. Einbauvorrichtung für eine Rollenantriebseinheit (11) - PDU - zum Antreiben und Fördern von Gegenständen, insbesondere Frachtcontainern auf einer Rollenförderbahn, umfassend einen Einbaukanal (12), auf dessen Boden (13) die PDU fixierbar ist,
**gekennzeichnet durch**
eine Entwässerungseinrichtung im Boden, im Bereich des Montageortes der PDU, zum Abführen von Wasser, das in den Einbaukanal (12) gelangt, die eine Wanne (14) umfaßt.

2. Einbauvorrichtung nach Anspruch 1,
**dadurch gekennzeichnet, daß**
die Wanne (14) an einem tief liegenden Punkt mindestens eine Entwässerungsöffnung (40) aufweist.

3. Einbauvorrichtung nach Anspruch 1 oder 2,
**dadurch gekennzeichnet, daß**
die Wanne (14) einen trichterförmig zulaufenden Wannenboden (19) aufweist.

4. Einbauvorrichtung nach einem der Ansprüche 1 bis 3,
**dadurch gekennzeichnet, daß**
der Wannenumriß im wesentlichen dem Umriß der Rollenantriebseinheit (11) entspricht.

5. Einbauvorrichtung nach einem der vorhergehenden Ansprüche,
**dadurch gekennzeichnet, daß**
die Wanne (14) gegebenenfalls zusammen mit einer Dichtung (37) mittels derselben Schraubbolzen oder dergleichen Befestigungseinrichtungen am Boden des Einbaukanals befestigt ist, wie die Rollenantriebseinheit (11).

6. Einbauvorrichtung für eine Rollenantriebseinheit (11) - PDU - zum Antreiben und Fördern von Gegenständen, insbesondere Frachtcontainern auf einer Rollenförderbahn, umfassend einen Einbaukanal (12), auf dessen Boden (13) die PDU fixierbar ist,
**gekennzeichnet durch**
eine Entwässerungseinrichtung im Boden, vorzugsweise im Bereich des Montageortes der PDU, zum Abführen von Wasser das in den Einbaukanal (12) gelangt, die Sieb- und/oder Filtereinrichtungen (17, 18) derart umfaßt, daß gröbere Schmutzteile zurückgehalten werden.

7. Einbauvorrichtung nach einem der vorhergehenden Ansprüche,
**dadurch gekennzeichnet, daß**
die Rollenantriebseinheit (11) derart hoch- oder fortschwenkbar montiert ist, daß der Bereich unter der Rollenantriebseinheit (11) zum Reinigen, insbesondere zum Absaugen von dort gesammeltem Schmutz freigelegt werden kann.

## Claims

1. A mounting device for a roller drive unit (11) - PDU - for driving and transporting objects, in particular freight containers on a roller conveyor track, comprising a mounting channel (12) on the floor (13) of which the PDU is fixable,
**characterised by** a drainage device in the floor, in the region of the mounting site of the PDU, for draining water which finds its way into the mounting channel (12), the said drainage channel comprising a tank (14).

2. A mounting device according to Claim 1,
**characterised in that** the tank (14) has at least one drain opening (40) in a low position.

3. A mounting device according to Claim 1 or 2,
**characterised in that** the tank (14) has a tank floor (19) which tapers in a funnel-like manner,

4. A mounting device according to Claim 1 to 3,
**characterised in that** the rim of the tank substantially corresponds to the rim of the roller drive unit (11).

5. A mounting device according to one of the preceding claims,
**characterised in that** the tank (14), if necessary together with a gasket (37), is fastened to the floor of the mounting channel by means of the same studs or similar fastening devices as the roller drive unit (11).

6. A mounting device for a roller drive unit (11) - PDU - for driving and transporting objects, in particular freight containers on a roller conveyor track, comprising a mounting channel (12) on the floor (13) of which the PDU is fixable,
**characterised by** a drainage device in the floor, preferably in the region of the mounting site of the PDU, for draining water which finds its way into the mounting channel (12), the said drainage device comprising sieving and/or filtering devices (17, 18) in such a way that coarser particles of dirt are retained.

7. A mounting device according to one of the preceding claims,
**characterised in that** the roller drive unit (11) is mounted so as to be swivellable upwards or away in such a way that the region beneath the roller drive unit (11) can be exposed for cleaning, in particular for sucking collected dirt from there.

## Revendications

1. Dispositif d'installation pour une unité d'entraînement à galets (11) - PDU - pour entraîner et transporter des objets, en particulier des conteneurs à marchandises sur un chemin de transport à galets, comprenant une voie d'installation (12) sur le fond (13) de laquelle la PDU peut être fixée,
**caractérisé par**
un dispositif d'assèchement dans le fond, au niveau du lieu de montage de la PDU, pour évacuer de l'eau entrant dans la voie d'installation (12), le dispositif comprenant un bac (14).

2. Dispositif d'installation selon la revendication 1, **caractérisé en ce que** le bac (14) présente au moins un orifice d'assèchement (40) en un endroit abaissé.

3. Dispositif d'installation selon la revendication 1 ou 2, **caractérisé en ce que** le bac (14) présente un fond de bac (19) se terminant en entonnoir.

4. Dispositif d'installation selon l'une des revendications 1 à 3, **caractérisé en ce que** le contour du bac correspond essentiellement au contour de l'unité d'entraînement à galets (11).

5. Dispositif d'installation selon l'une des revendications précédentes, **caractérisé en ce que** le bac (14) est fixé éventuellement en conjonction avec un joint d'étanchéité (37) au moyen des mêmes boulons filetés ou de dispositifs de fixation similaires sur le fond de la voie d'installation que l'unité d'entraînement à galets (11).

6. Dispositif d'installation pour une unité d'entraînement à galets (11) - PDU - pour entraîner et transporter des objets, en particulier des conteneurs à marchandises sur un chemin de transport à galets, comprenant une voie d'installation (12) sur le fond (13) de laquelle la PDU peut être fixée,
**caractérisé par**
un dispositif d'assèchement dans le fond, de préférence au niveau du lieu de montage de la PDU, pour évacuer de l'eau entrant dans la voie d'installation (12), le dispositif comprenant des dispositifs à crible et/ou à filtre (17, 18) de telle sorte que des particules de saleté grossières sont retenues.

7. Dispositif d'installation selon l'une des revendications précédentes, **caractérisé en ce que** l'unité d'entraînement à galets (11) est montée de façon à pouvoir pivoter vers le haut ou en s'écartant de manière à ce que la zone sous l'unité d'entraînement à galets (11) puisse être dégagée pour le nettoyage, en particulier pour l'aspiration de la saleté qui s'y est accumulée.
